(19) Europäisches Patentamt
European Patent Office
Office européen des brevets

(11) **EP 4 198 874 A1**

(12) **EUROPEAN PATENT APPLICATION**
published in accordance with Art. 153(4) EPC

(43) Date of publication:
**21.06.2023 Bulletin 2023/25**

(21) Application number: **21855442.6**

(22) Date of filing: **05.08.2021**

(51) International Patent Classification (IPC):
**G06T 3/60** (2006.01)

(52) Cooperative Patent Classification (CPC):
**G06T 3/00; G06T 3/60; G06T 7/55; G06T 7/90; G06T 19/00**

(86) International application number:
**PCT/CN2021/110960**

(87) International publication number:
**WO 2022/033389 (17.02.2022 Gazette 2022/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.08.2020 CN 202010803372**

(71) Applicant: **ZTE Corporation**
**Shenzhen, Guangdong 518057 (CN)**

(72) Inventors:
• **ZHENG, Zhengshi**
  **Shenzhen, Guangdong 518057 (CN)**
• **QIAN, Xiaobing**
  **Shenzhen, Guangdong 518057 (CN)**
• **CHEN, Jun**
  **Shenzhen, Guangdong 518057 (CN)**
• **HAO, Zhijian**
  **Shenzhen, Guangdong 518057 (CN)**
• **ZHOU, Pengfei**
  **Shenzhen, Guangdong 518057 (CN)**

(74) Representative: **Osterhoff, Utz**
**Bockermann Ksoll**
**Griepenstroh Osterhoff**
**Patentanwälte**
**Bergstraße 159**
**44791 Bochum (DE)**

(54) **IMAGE PROCESSING METHOD AND APPARATUS, AND ELECTRONIC DEVICE AND STORAGE MEDIUM**

(57)     Disclosed are an image processing method, an image processing apparatus (40), an electronic device and a storage medium, relating to the technical field of computer graphics. The method includes: sending initial pose data of a terminal at an initial moment to server, the initial moment being a moment before a current moment (101); receiving initial image data returned by the server according to the initial pose data, the initial image data including two-dimensional image data corresponding to the initial pose data (102); obtaining target pose data of the terminal at the current moment (103); and adjusting the two-dimensional image data according to the initial pose data and the target pose data to obtain target image data corresponding to the target pose data (104).

FIG. 1

**Description**

**CROSS-REFERENCE TO RELATED APPLICATIONS**

This application claims priority to Chinese Patent Application No. 202010803372.3, filed on August 11, 2020, the entire contents of which are incorporated herein by reference.

**TECHNICAL FIELD**

The present application relates to the technical field of computer graphics, in particular to an image processing method, an image processing apparatus, an electronic device and a storage medium.

**BACKGROUND**

When using a virtual reality (VR) terminal, it often happens that the terminal cannot render the screen corresponding to the terminal action synchronously. That is, part of the screen displayed by the VR terminal is the image displayed last time, and part of the screen is the newly rendered image. As a result, the continuously displayed images seen by the VR terminal users may suffer from hysteresis and stuck and even the user may experience dizziness. At present, asynchronous distortion technologies such as screen rotation and displacement are used to solve the problem of screen refresh display caused by untimely local VR rendering, such as asynchronous time warp ("ATW'), asynchronous space warp ("ASW"), etc.

During the implementation of the asynchronous warp technology, the rendering thread and the ATW thread in the graphics processing unit (GPU) run asynchronously. Before the rendering thread and the ATW thread are synchronized each time, the ATW thread generates a new image to be displayed according to the last frame image of the rendering thread. However, when it is detected that the rendering thread cannot render a new image to be displayed within the refresh cycle, the ATW thread needs to preempt the rendering thread. Therefore, the GPU hardware needs to support reasonable preemption granularity, for example, at 90 Hz, the interval between frames is about 11ms (1/90Hz). In order to ensure that the ATW thread can generate a new frame of image, the ATW thread needs to be able to preempt the rendering thread and the running time is less than 11ms. It also requires operating system and driver support to make the GPU preemptive. It can be seen that the asynchronous warp technology has a high requirement for the hardware of the VR terminal. If the image rendering is performed by the server, due to the network delay, the terminal cannot render the screen corresponding to the terminal action synchronously.

**SUMMARY**

Embodiments of the present application provide an image processing method, including: sending initial pose data of a terminal at an initial moment to server, the initial moment being a moment before a current moment; receiving initial image data returned by the server according to the initial pose data, the initial image data including two-dimensional image data corresponding to the initial pose data; obtaining target pose data of the terminal at the current moment; and adjusting the two-dimensional image data according to the initial pose data and the target pose data to obtain target image data corresponding to the target pose data.

Embodiments of the present application further provide an image processing apparatus, including: a sending module, configured to send initial pose data of a terminal at an initial moment to server, the initial moment being a moment before a current moment; a receiving module, configured to receive initial image data returned by the server according to the initial pose data, the initial image data including two-dimensional image data corresponding to the initial pose data; an obtaining module, configured to obtain target pose data of the terminal at the current moment; and an adjusting module, configured to adjust the two-dimensional image data according to the initial pose data and the target pose data to obtain target image data corresponding to the target pose data.

Embodiments of the present application further provide an electronic device, including: at least one processor; and a memory communicated with the at least one processor; the memory stores instructions executable by the at least one processor, the instructions are executed by the at least one processor, to cause the at least one processor to perform the image processing method described above.

Embodiments of the present application further provide a computer-readable storage medium storing a computer program, when the computer program is executed by a processor, the image processing method described above is implemented.

**BRIEF DESCRIPTION OF THE DRAWINGS**

FIG. 1 is a flowchart of an image processing method according to a first embodiment of the present application.

FIG. 2 is a flowchart of an image processing method according to a second embodiment of the present application.

FIG. 3 is a flowchart of an image processing method according to a third embodiment of the present application.

FIG. 4 is a structural block diagram of an image processing apparatus according to a fourth embodiment of the present application.

FIG. 5 is a structural block diagram of an electronic device according to a fifth embodiment of the present application.

**DETAILED DESCRIPTION OF THE EMBODIMENTS**

In order to make the purpose, technical solutions and advantages of the embodiments of the present application clearer, the embodiments of the present application will be described in detail below with reference to the accompanying drawings. However, those of ordinary skill in the art can understand that in each embodiment of the present application, many technical details are provided for readers to better understand the present application. However, even without these technical details and various changes and modifications based on the following embodiments, the technical solutions claimed in the present application can also be realized. The division of the following embodiments is for the convenience of description, and should not constitute any limitation to the specific implementation of the present application, and the embodiments can be combined and referred to each other on the premise of no contradiction.

Cloud virtual reality (VR) technology renders the image to be displayed by the VR terminal through the server, which can greatly reduce the power consumption of the device caused by the rendering of the local VR terminal, and reduce the hardware requirements of the VR terminal. With the continuous development of 5G technology, the speed of network transmission has been improved, and the application of cloud VR technology has been further improved. However, there is usually a network delay in network transmission, and the VR terminal cannot synchronously render the image corresponding to terminal action within the refresh cycle, resulting in problems such as stuck and jittering in the continuous images that users see, which seriously affects the use of users.

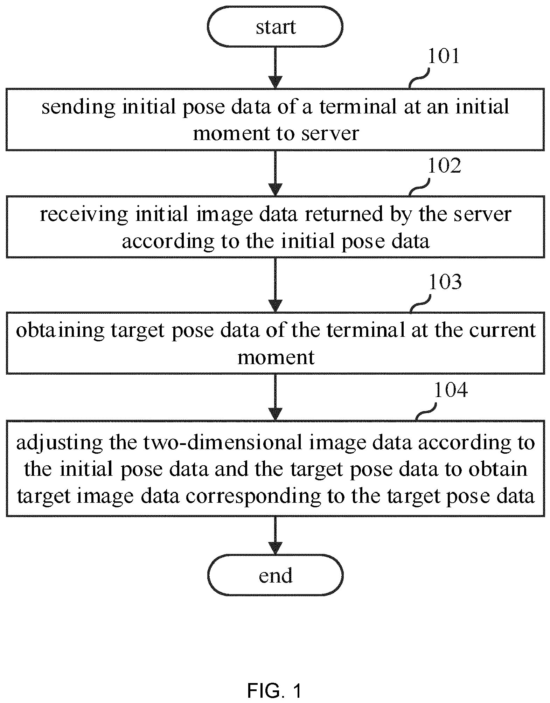

A first embodiment of the present application relates to an image processing method, and the image processing method is applied to a VR terminal, and the VR terminal can be a head-mounted VR glasses, a helmet, or the like. The flowchart is shown in FIG. 1.

Operation 101, sending initial pose data of a terminal at an initial moment to server, the initial moment being a moment before a current moment.

Operation 102, receiving initial image data returned by the server according to the initial pose data, the initial image data including two-dimensional image data corresponding to the initial pose data.

Operation 103, obtaining target pose data of the terminal at the current moment.

Operation 104, adjusting the two-dimensional image data according to the initial pose data and the target pose data to obtain target image data corresponding to the target pose data.

The present application provides an image processing method. The server returns the initial image data according to the initial pose data of the terminal. The initial image data includes two-dimensional image data corresponding to the initial pose data. The terminal adjusts the two-dimensional image data according to the target pose data and the initial pose data at the current moment, and generates target image data corresponding to the target pose data. It ensures that the two-dimensional image data displayed by the terminal always corresponds to the current pose of the terminal. Due to the low dimension of the two-dimensional image data, the adjustment speed of the two-dimensional image data is fast, so that even if there is a network delay, it can also ensure that the adjusted two-dimensional image data is refreshed in time within the refresh week, thereby avoiding the problem that the image is not refreshed in time during the refresh cycle due to network delays, and improves the effect of terminal display images. Besides, the server sends the initial image data to the terminal, so that the terminal does not need to perform complex rendering operations, improves the speed of image display, and reduces the hardware requirements of the terminal device. In addition, in the process of generating the target image, it does not require the terminal's GPU hardware to support a reasonable preemption granularity, nor does the terminal's operating system and driver support enable GPU preemption, which further reduces the hardware requirements of the terminal and is more conducive to the promotion of VR terminals.

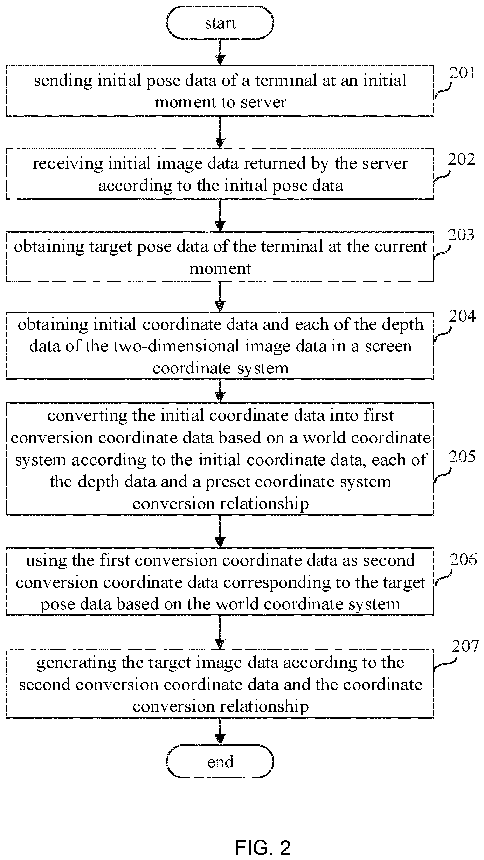

A second embodiment of the present application relates to an image processing method. The second embodiment is a specific description of operations 101-103 in the first embodiment, and the flowchart is shown in FIG. 2.

Operation 201, sending the initial pose data of the terminal at the initial moment to the server, the initial moment being the moment before the current moment.

The VR terminal can obtain its own pose data in real time, and the pose data includes pose data and position data of the terminal. The initial moment is the moment before the current moment, for example, the current moment is t1; the initial moment t0 is less than t1. The interval between the initial moment and the current moment may be smaller than a preset interval, for example, the preset interval may be 5s, 1ms, or 0.1ms; the preset interval may also be the same as the time interval for collecting pose data of the terminal.

It should be noted that the initial time is not a fixed time, but a dynamically changing time according to the current time. For example, if the current time is the 80th second, the initial time may be less than the 80th second, and may be the 79th second, the 78th second, etc.

There may be various forms of the initial pose data, and the type of the initial pose data is not limited in this example, for example, the expression form of the initial pose data in this example may be a matrix. The terminal sends the collected initial pose data to the server.

The terminal can obtain own pose data in real time through the sensor, and the sensor can be a gyroscope, a laser positioning device, and the like.

Operation 202, receiving initial image data returned by the server according to the initial pose data, the initial image data including two-dimensional image data corresponding to the initial pose data.

The server can pre-store three-dimensional image data of the space where the VR terminal is located, for example, pre-store three-dimensional image data of multiple game scenes, such as forests, secret rooms, cruise ships and other places. After the server receives the initial pose data, the server can render the stereoscopic image data observed by the terminal at the initial moment pose into two-dimensional image data corresponding to the initial pose data according to the initial pose data. The two-dimensional image data corresponds to the initial moment, and also corresponds to the initial pose data.

It is worth mentioning that rendering an image is converting high-dimensional image data into low-dimensional image data. After the terminal receives the two-dimensional image data, the terminal can quickly draw the low-dimensional two-dimensional image data, which can reduce resource usage of the terminal and increase the speed of displaying images.

It should be noted that the initial image data includes the two-dimensional image data, depth data corresponding to each pixel in the two-dimensional image data, and color information corresponding to each pixel.

In addition, the server can also return the two-dimensional image data and the corresponding initial pose data to the terminal at the same time, so as to ensure a one-to-one correspondence between the initial pose data of the terminal and the two-dimensional image data.

Operation 203, obtaining target pose data of the terminal at the current moment.

After receiving the initial image data, the target pose data of the terminal at the current moment can be acquired. The acquisition method is roughly the same as the process of operation 201. Similarly, the target pose data may include: pose data and position data of the terminal at the current moment, the pose data may be, for example, the angle at which the terminal is rotated, and the position data may be the spatial coordinates of the terminal at the current moment.

Operation 204, obtaining initial coordinate data and each of the depth data of the two-dimensional image data in a screen coordinate system.

The initial image data includes the coordinates of the two-dimensional image data in the screen coordinate system, and the coordinates are used as the initial coordinate data of the two-dimensional image data. For example, the initial coordinate data of the two-dimensional image in the screen coordinate system can be expressed as $(Xcurrent, Ycurrent)^T$. The initial image data further includes depth data and color information corresponding to each pixel in the two-dimensional image data. Specifically, the color information may be the respective color values of the three primary colors of RGB; the depth data may be expressed as: DepthBuffer(Xcurrent, Ycurrent).

Operation 205, converting the initial coordinate data into first conversion coordinate data based on a world coordinate system according to the initial coordinate data, each of the depth data and a preset coordinate system conversion relationship.

In an embodiment, the initial coordinate data is converted into the first standard device coordinate based on the standard device coordinate system according to the first conversion relationship and each depth data; the pose matrix and the projection matrix are obtained from the initial pose data; the first conversion coordinate data is obtained according to the pose matrix, the projection matrix, the first standard device coordinate and the second conversion relationship.

Information such as the width and height of the terminal screen can be obtained. For example, the screen width is ScreenWidth and the screen height is ScreenHeight, then Xcurrent is not greater than ScreenWidth and not less than 0, Ycurrent is not greater than ScreenHeight and not less than 0. The color information corresponding to each pixel in the two-dimensional image data is expressed as ColorBuffer, and the depth data is expressed as DepthBuffer. The corresponding depth of each pixel in the screen space coordinate system is DepthBuffer(Xcurrent, Ycurrent).

The preset coordinate conversion relationship includes a first conversion relationship between the screen coordinate system and the standard device coordinate system, and a second conversion relationship between the standard device coordinate system and the world coordinate system.

In this example, the first conversion relationship is:

$$x = 2*Xcurrent/ScreenWidth-1; \quad y = 2*Ycurrent/ScreenHeight-1;$$

$$z=DepthBuffer(Xcurrent,Ycurrent); \quad w = 1.0 \quad \text{formula (1)}$$

The initial coordinate data can be expressed as $(Xcurrent, Ycurrent)^T$, screen width ScreenWidth and screen height ScreenHeight, Xcurrent is not greater than ScreenWidth and not less than 0, Ycurrent is not greater than ScreenHeight and not less than 0. w is a preset value, which is used to represent the characteristics of image data that are near large and far small, z represents the vertical axis in the standard device coordinate system.

According to the formula (1), the initial coordinate data $(Xcurrent, Ycurrent)^T$ can be converted into the first standard device coordinates in the standard device coordinate system. That is, the obtained first standard device coordinates are expressed as $(x, y, z, w)^T$.

The second conversion relationship between the standard device coordinate system and the world coordinate system can be expressed as:

$$(x\_world,y\_world,z\_world,w\_world)^T =Rcurrent^{-1}*P^{-1}*(x,y,z,w)^T \quad \text{formula (2)}$$

$(x\_world,y\_world,z\_world,w\_world)^T$ represents the coordinates in the world coordinate system, which is expressed as the first conversion coordinate data in this example, $(x, y, z, w)^T$ represents the first standard device coordinates, and P represents the projection matrix for converting the three-dimensional image data into two-dimensional image data. Rcurrent represents the initial pose data of the terminal at the initial moment, and the initial pose data may be expressed in the form of a matrix.

According to the second conversion relationship represented by formula (2), the first standard device coordinates $(x, y, z, w)^T$ may be converted into first conversion coordinate data $(x\_world, y\_world, z\_world, w\_world)^T$ in the world coordinate system.

Operation 206, using the first conversion coordinate data as second conversion coordinate data corresponding to the target pose data based on the world coordinate system.

In an embodiment, the first conversion coordinate is used as the second conversion coordinate data corresponding to the target pose data in the world coordinate system, namely:

$$(x\_world\_n,y\_world\_n,z\_world\_n,w\_world\_n)^T=(x\_world,y\_world,z\_world,w\_world)^T$$

$(x\_world\_n, y\_world\_n, z\_world\_n, w\_world\_n)^T$ represents the coordinates corresponding to the target pose data in the world coordinate system; $(x\_world, y\_world, z\_world, w\_world)^T$ represents the first conversion coordinate data.

Operation 207, generating the target image data according to the second conversion coordinate data and the coordinate conversion relationship.

In an embodiment, the second standard device coordinate data corresponding to the target pose data in the standard device coordinate system is obtained according to the second conversion coordinate data, the target pose data, the projection matrix, and the second conversion relationship. The second standard device coordinate data is converted into target coordinate data based on the screen coordinate system according to the first conversion relationship. The color information of each pixel in the two-dimensional image data is mapped to the corresponding pixel in the target coordinate data to form target image data.

According to the second conversion relationship, namely the formula (2), it can be known that:

$$(x\_world\_n,y\_world\_n,z\_world\_n,w\_world\_n)^T =Rnext^{-1}*P^{-1}*(x',y',z',w')^T \quad \text{formula (3)}$$

(x',y',z',w')T represents the second standard device coordinate data corresponding to the current moment. A simple deformation of formula (3) can be obtained:

$$(x',y',z',w')^T = P*Rnext*(x\_world\_n, y\_world\_n, z\_world\_n, w\_world\_n)^T$$

Since

$$(x\_world\_n, y\_world\_n, z\_world\_n, w\_world\_n)^T = (x\_world, y\_world, z\_world, w\_world)^T, (x',y',z',w')^T = P*Rnext*(x\_world, y\_world, z\_world, w\_world)^T \quad \text{formula (4)}$$

Rnext represents the target pose data, which is expressed in the form of matrix in this example; P is the projection matrix. $(x', y', z', w')^T$ represents the second standard device coordinate data corresponding to the target pose data.

According to the first conversion relationship, the second standard device coordinate data can be converted into coordinates in the current screen coordinate system;

$$Xnext = ScreenWidth* (x'+1)/2; Ynext = ScreenHeight*(y'+1)/2 \quad \text{formula (5)}$$

The screen coordinates at the current moment are expressed as $(Xnext, Ynext)^T$.

After the image data at the current moment is obtained based on the target coordinate data in the screen coordinate system, the color information of each pixel in the two-dimensional image data is mapped to the corresponding pixel in the target coordinate data to form the target image data.

For example, the coordinate (0, 0) point in the two-dimensional image data corresponds to color1, and the coordinate (0, 0) is transformed into (3, 0) position, then the pixel at the (3, 0) position is filled with color1.

It should be noted that operations 204 to 207 are specific descriptions of operation 103.

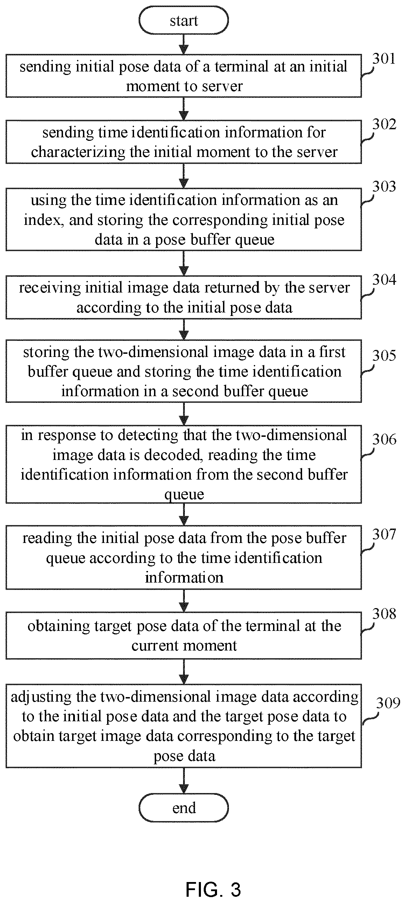

A third embodiment of the present application relates to an image processing method. This embodiment is a further improvement on the second embodiment, and the main improvements are as follows: in this embodiment, the terminal searches for the initial pose data corresponding to the two-dimensional image data according to the time identification information, and the flowchart of the image processing method is shown in FIG. 3.

Operation 301, sending initial pose data of a terminal at an initial moment to server.

This operation 301 is substantially the same as operation 201, and will not be repeated herein.

Operation 302, sending time identification information for characterizing the initial moment to the server.

The time identification information may be set according to actual applications, for example, the time identification information may be a timestamp at an initial moment. The timestamp of the initial moment is sent to the server, and the timestamp can be sent to the server at the same time as the initial pose data. It is also possible to upload the timestamp to the server after the initial pose data is sent.

Operation 303, using the time identification information as an index, and storing the corresponding initial pose data in a pose buffer queue.

The timestamp information can be used as an index to cache the initial pose data in the terminal, so that subsequent terminals can quickly search for the initial pose data according to the timestamp. For example, a pose matrix buffer queue can be set in the terminal, the initial pose data is stored in the pose matrix buffer queue, and the timestamp is used as an index of the initial pose data.

Operation 304, receiving initial image data returned by the server according to the initial pose data.

The initial image data further includes time identification information. The server can send the initial image data and the time identification information to the terminal together. A receiving thread and a decoding thread can be set in the terminal, and the receiving thread and the decoding thread can run asynchronously, so as to improve the speed of displaying images of the terminal. The receiving thread is configured to receive two-dimensional image data and corresponding time identification information. The decoding thread is configured to decode the two-dimensional image data.

Operation 305, storing the two-dimensional image data in a first buffer queue and storing the time identification information in a second buffer queue.

The terminal may set a first buffer queue and a second buffer queue, the first buffer queue is configured to buffer the received two-dimensional image data, and the second buffer queue is configured to store time identification information corresponding to the initial moment. The decoding thread is configured to obtain two-dimensional image data from the first buffer queue for decoding.

Operation 306, in response to detecting that the two-dimensional image data is decoded, reading the time identification information from the second buffer queue.

Since the receiving thread and the decoding thread run asynchronously, if it is detected that the two-dimensional image data is decoded, the time identification information is read from the second buffer queue, so as to ensure that the initial pose data corresponding to the two-dimensional image data is obtained. For example, if each frame of two-dimensional image data is decoded, the time identification information corresponding to the two-dimensional image data is read from the second buffer queue.

Operation 307, reading the initial pose data from the pose buffer queue according to the time identification information.

Since the initial pose data is stored with time identification information, the initial pose data corresponding to the time identification information can be read out through the time identification information. For example, the initial time is T1, and the corresponding initial pose data is Rcurrent. According to T1, the Rcurrent can be read from the pose matrix buffer queue.

Operation 308, obtaining target pose data of the terminal at the current moment.

The operation 308 is roughly the same as operation 203 in the second embodiment, and will not be repeated herein.

Operation 309, adjusting the two-dimensional image data according to the initial pose data and the target pose data to obtain target image data corresponding to the target pose data.

The operation 309 is substantially the same as operation 204 to operation 207 in the second embodiment, and will not be repeated herein.

This embodiment provides an image processing method. The initial image data includes time identification information corresponding to the initial moment, so that the server does not need to return the initial pose data, and the terminal can read the initial pose data according to the time identification information, which improves the speed of obtaining initial pose data. The first buffer queue and the second buffer queue are set so that decoding can be performed asynchronously, further improving the speed of displaying image data.

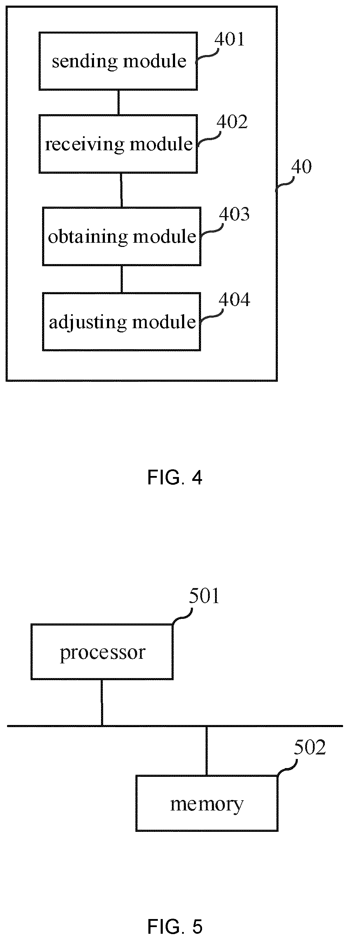

A fourth embodiment of the present application relates to an image processing apparatus. The structural block diagram is shown in FIG. 4, including: a sending module 401, a receiving module 402, an obtaining module 403 and an adjusting module 404.

The sending module 401 is configured to send initial pose data of a terminal at an initial moment to server, and the initial moment is a moment before a current moment. The receiving module is configured to receive initial image data returned by the server according to the initial pose data, and the initial image data includes two-dimensional image data corresponding to the initial pose data. The obtaining module 403 is configured to obtain target pose data of the terminal at the current moment. The adjusting module 404 is configured to adjust the two-dimensional image data according to the initial pose data and the target pose data to obtain target image data corresponding to the target pose data.

This embodiment is a device embodiment corresponding to the first embodiment, and this embodiment can be implemented in cooperation with the first embodiment. The relevant technical details mentioned in the first embodiment are still valid in this embodiment, and will not be repeated here in order to reduce repetition. Correspondingly, the relevant technical details mentioned in this embodiment can also be applied in the first embodiment.

All the modules involved in this embodiment are logical modules. In practical applications, a logical unit may be a physical unit, or a part of a physical unit, or may be realized by a combination of multiple physical units. In addition, in order to highlight the innovative part of the present application, units that are not closely related to solving the technical problems proposed by the present application are not introduced in this embodiment, which does not mean that there are no other units in this embodiment.

A fifth embodiment of the present application relates to an electronic device, the structural block diagram of which is shown in FIG. 5. The electronic device includes at least one processor 501 and a memory 502 communicated with the at least one processor 501. The memory 502 stores instructions executable by the at least one processor 501, and the instructions are executed by the at least one processor 501, so that the at least one processor 501 can execute the above image processing method.

The memory and the processor are connected by a bus, and the bus may include any number of interconnected buses and bridges, and the bus links one or more processors and various circuits of the memory together. The bus may also link together various other circuits such as peripherals, voltage regulators, and power management circuits, all of which are well known in the art. Therefore, it is not described further herein. The bus interface provides an interface between the bus and the transceivers. A transceiver may be a single element or multiple elements, such as multiple receivers and transmitters, providing means for communicating with various other devices over a transmission medium. The data processed by the processor is transmitted on the wireless medium through the antenna. Further, the antenna also receives the data and transmits the data to the processor.

The processor manages the bus and general processing, and can also provide a variety of functions, including timing, peripheral interfacing, voltage regulation, power management, and other control functions. The memory may be configured to store data used by the processor when performing operations.

A sixth embodiment of the present application relates to a computer-readable storage medium storing a computer program, and the above-mentioned image processing method is implemented when the computer program is executed by a processor.

Those skilled in the art can understand that all or part of the steps in the methods of the above embodiments can be completed by instructing related hardware through programs. The program is stored in a storage medium, and includes several instructions for enabling a device (which may be a single-chip microcomputer, a chip, etc.) or a processor to execute all or part of the steps of the methods described in various embodiments of the present application. The aforementioned storage medium includes: U disk, mobile hard disk, read-only memory (ROM), random access memory (RAM), magnetic disk or optical disk, and other media capable of storing program codes.

Those of ordinary skill in the art can understand that the above-mentioned implementation modes are specific examples for realizing the present application. In practice, however, various changes may be made in form and detail without departing from the scope of the present application.

**Claims**

1. An image processing method, **characterized by** comprising:

   sending initial pose data of a terminal at an initial moment to server, the initial moment being a moment before a current moment;
   receiving initial image data returned by the server according to the initial pose data, the initial image data comprising two-dimensional image data corresponding to the initial pose data;
   obtaining target pose data of the terminal at the current moment; and
   adjusting the two-dimensional image data according to the initial pose data and the target pose data to obtain target image data corresponding to the target pose data.

2. The image processing method according to claim 1, wherein the initial image data further comprises depth data corresponding to each pixel in the two-dimensional image data;
   the adjusting the two-dimensional image data according to the initial pose data and the target pose data to obtain the target image data corresponding to the target pose data comprises:

   obtaining initial coordinate data and each of the depth data of the two-dimensional image data in a screen coordinate system;
   converting the initial coordinate data into first conversion coordinate data based on a world coordinate system according to the initial coordinate data, each of the depth data and a preset coordinate system conversion relationship;
   using the first conversion coordinate data as second conversion coordinate data corresponding to the target pose data based on the world coordinate system; and
   generating the target image data according to the second conversion coordinate data and the coordinate conversion relationship.

3. The image processing method according to claim 1 or 2, wherein before receiving the initial image data returned by the server according to the initial pose data, the method further comprises:

   sending time identification information for characterizing the initial moment to the server; and
   using the time identification information as an index, and storing the corresponding initial pose data in a pose buffer queue.

4. The image processing method according to claim 3, wherein the initial image data further comprises the time identification information;
   before adjusting the two-dimensional image data according to the initial pose data and the target pose data to obtain the target image data corresponding to the target pose data, the method further comprises:
   reading the initial pose data from the pose buffer queue according to the time identification information.

5. The image processing method according to claim 4, wherein before reading the initial pose data from the pose buffer queue according to the time identification information, the method further comprises:

storing the two-dimensional image data in a first buffer queue and storing the time identification information in a second buffer queue; and

in response to detecting that the two-dimensional image data is decoded, reading the time identification information from the second buffer queue.

**6.** The image processing method according to claim 2, wherein the coordinate conversion relationship comprises a first conversion relationship between the screen coordinate system and a standard device coordinate system, and a second conversion relationship between the standard device coordinate system and the world coordinate system; the converting the initial coordinate data into the first conversion coordinate data based on the world coordinate system according to the initial coordinate data, each of the depth data and the preset coordinate system conversion relationship comprises:

converting the initial coordinate data into first standard device coordinate data based on the standard device coordinate system according to the first conversion relationship and each of the depth data;

obtaining a pose matrix and a projection matrix from the initial pose data; and

obtaining the first conversion coordinate data according to the pose matrix, the projection matrix, the first standard device coordinate data, and the second conversion relationship.

**7.** The image processing method according to claim 6, wherein the generating the target image data according to the second conversion coordinate data and the coordinate conversion relationship comprises:

obtaining second standard device coordinate data corresponding to the target pose data in the standard device coordinate system according to the second conversion coordinate data, the target pose data, the projection matrix and the second conversion relationship;

converting the second standard device coordinate data into target coordinate data based on the screen coordinate system according to the first conversion relationship; and

mapping color information of each pixel in the two-dimensional image data to the corresponding pixel in the target coordinate data to form the target image data.

**8.** An image processing apparatus, **characterized by** comprising:

a sending module, configured to send initial pose data of a terminal at an initial moment to server, the initial moment being a moment before a current moment;

a receiving module, configured to receive initial image data returned by the server according to the initial pose data, the initial image data comprising two-dimensional image data corresponding to the initial pose data;

an obtaining module, configured to obtain target pose data of the terminal at the current moment; and

an adjusting module, configured to adjust the two-dimensional image data according to the initial pose data and the target pose data to obtain target image data corresponding to the target pose data.

**9.** An electronic device, **characterized by** comprising:

at least one processor; and

a memory communicated with the at least one processor;

wherein the memory stores instructions executable by the at least one processor, the instructions are executed by the at least one processor, to cause the at least one processor to perform the image processing method according to any one of claims 1 to 7.

**10.** A computer-readable storage medium storing a computer program, **characterized in that**, when the computer program is executed by a processor, the image processing method according to any one of claims 1 to 7 is implemented.

```
                        ┌──────────────┐
                        │    start     │
                        └──────┬───────┘
                               │            101
                               ▼
        ┌──────────────────────────────────────────────────┐
        │   sending initial pose data of a terminal at an initial │
        │                moment to server                  │
        └──────────────────────┬───────────────────────────┘
                               │            102
                               ▼
        ┌──────────────────────────────────────────────────┐
        │   receiving initial image data returned by the server │
        │          according to the initial pose data      │
        └──────────────────────┬───────────────────────────┘
                               │            103
                               ▼
        ┌──────────────────────────────────────────────────┐
        │  obtaining target pose data of the terminal at the current │
        │                    moment                        │
        └──────────────────────┬───────────────────────────┘
                               │            104
                               ▼
        ┌──────────────────────────────────────────────────┐
        │  adjusting the two-dimensional image data according to │
        │   the initial pose data and the target pose data to obtain │
        │ target image data corresponding to the target pose data │
        └──────────────────────┬───────────────────────────┘
                               │
                               ▼
                        ┌──────────────┐
                        │     end      │
                        └──────────────┘
```

FIG. 1

```
                    ┌──────────┐
                    │   start   │
                    └──────────┘
                         │
                         ▼
   ┌─────────────────────────────────────────────┐
   │  sending initial pose data of a terminal at an initial │   201
   │              moment to server                │
   └─────────────────────────────────────────────┘
                         │
                         ▼
   ┌─────────────────────────────────────────────┐
   │  receiving initial image data returned by the server │   202
   │        according to the initial pose data    │
   └─────────────────────────────────────────────┘
                         │
                         ▼
   ┌─────────────────────────────────────────────┐
   │  obtaining target pose data of the terminal at the current │   203
   │                   moment                     │
   └─────────────────────────────────────────────┘
                         │
                         ▼
   ┌─────────────────────────────────────────────┐
   │  obtaining initial coordinate data and each of the depth │   204
   │    data of the two-dimensional image data in a screen │
   │                coordinate system             │
   └─────────────────────────────────────────────┘
                         │
                         ▼
   ┌─────────────────────────────────────────────┐
   │     converting the initial coordinate data into first │
   │  conversion coordinate data based on a world coordinate │
   │  system according to the initial coordinate data, each of │   205
   │    the depth data and a preset coordinate system │
   │             conversion relationship          │
   └─────────────────────────────────────────────┘
                         │
                         ▼
   ┌─────────────────────────────────────────────┐
   │   using the first conversion coordinate data as second │   206
   │  conversion coordinate data corresponding to the target │
   │   pose data based on the world coordinate system │
   └─────────────────────────────────────────────┘
                         │
                         ▼
   ┌─────────────────────────────────────────────┐
   │    generating the target image data according to the │   207
   │  second conversion coordinate data and the coordinate │
   │             conversion relationship          │
   └─────────────────────────────────────────────┘
                         │
                         ▼
                    ┌──────────┐
                    │    end    │
                    └──────────┘
```

FIG. 2

start

| sending initial pose data of a terminal at an initial moment to server | 301 |

| sending time identification information for characterizing the initial moment to the server | 302 |

| using the time identification information as an index, and storing the corresponding initial pose data in a pose buffer queue | 303 |

| receiving initial image data returned by the server according to the initial pose data | 304 |

| storing the two-dimensional image data in a first buffer queue and storing the time identification information in a second buffer queue | 305 |

| in response to detecting that the two-dimensional image data is decoded, reading the time identification information from the second buffer queue | 306 |

| reading the initial pose data from the pose buffer queue according to the time identification information | 307 |

| obtaining target pose data of the terminal at the current moment | 308 |

| adjusting the two-dimensional image data according to the initial pose data and the target pose data to obtain target image data corresponding to the target pose data | 309 |

end

FIG. 3

FIG. 4

FIG. 5

## INTERNATIONAL SEARCH REPORT

| | |
|---|---|
| International application No. |
| **PCT/CN2021/110960** |

**A. CLASSIFICATION OF SUBJECT MATTER**

G06T 3/60(2006.01)i

According to International Patent Classification (IPC) or to both national classification and IPC

**B. FIELDS SEARCHED**

Minimum documentation searched (classification system followed by classification symbols)

G06T

Documentation searched other than minimum documentation to the extent that such documents are included in the fields searched

Electronic data base consulted during the international search (name of data base and, where practicable, search terms used)

CNPAT, CNKI, EPODOC, WPI: 虚拟现实, VR, 增强现实, 增强显示, 虚拟增强, 沉浸式, 前一时刻, 上一时刻, 当前, 位姿, 坐标, 目标, 终端, 初始图像, 初始位姿, 渲染, 图像, virtual, reality, last, previous, current, present, moment, time, image

**C. DOCUMENTS CONSIDERED TO BE RELEVANT**

| Category* | Citation of document, with indication, where appropriate, of the relevant passages | Relevant to claim No. |
|---|---|---|
| Y | CN 104699247 A (BEIJING 7INVENSUN TECHNOLOGY CO., LTD.) 10 June 2015 (2015-06-10)<br>description paragraphs [0076]-[0122] | 1-10 |
| Y | CN 107977082 A (HISCENE (SHANGHAI) INFORMATION TECHNOLOGY CO., LTD.) 01 May 2018 (2018-05-01)<br>description, paragraphs [0049]-[0075] | 1-10 |
| A | CN 111627116 A (LENOVO (BEIJING) LIMITED) 04 September 2020 (2020-09-04)<br>entire document | 1-10 |
| A | CN 111277797 A (CHONGQING TERMINUS TECHNOLOGIES CO., LTD.) 12 June 2020 (2020-06-12)<br>entire document | 1-10 |
| A | CN 109521879 A (NETEASE (HANGZHOU) NETWORK CO., LTD.) 26 March 2019 (2019-03-26)<br>entire document | 1-10 |
| A | CN 106780601 A (UNTOUCH TECHNOLOGIES CO., LTD.) 31 May 2017 (2017-05-31)<br>entire document | 1-10 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **14 October 2021** | **26 October 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2021/110960** |

**C.     DOCUMENTS CONSIDERED TO BE RELEVANT**

| Category* | Citation of document, with indication, where appropriate, of the relevant passages | Relevant to claim No. |
|---|---|---|
| A | US 2019306486 A1 (CANON KABUSHIKI KAISHA) 03 October 2019 (2019-10-03)<br>  entire document | 1-10 |

Form PCT/ISA/210 (second sheet) (January 2015)

**INTERNATIONAL SEARCH REPORT**
Information on patent family members

International application No.

**PCT/CN2021/110960**

| Patent document cited in search report | | | Publication date (day/month/year) | Patent family member(s) | | | Publication date (day/month/year) |
|---|---|---|---|---|---|---|---|
| CN | 104699247 | A | 10 June 2015 | CN | 104699247 | B | 12 December 2017 |
| CN | 107977082 | A | 01 May 2018 | None | | | |
| CN | 111627116 | A | 04 September 2020 | None | | | |
| CN | 111277797 | A | 12 June 2020 | None | | | |
| CN | 109521879 | A | 26 March 2019 | None | | | |
| CN | 106780601 | A | 31 May 2017 | CN | 106780601 | B | 27 March 2020 |
| US | 2019306486 | A1 | 03 October 2019 | US | 10715785 | B2 | 14 July 2020 |
| | | | | JP | 2019180060 | A | 17 October 2019 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010803372